# EUROPEAN PATENT APPLICATION

(11) **EP 4 549 491 A1**
(43) Date of publication of application: **07.05.2025**
(21) Application number: 23831187.2
(22) Date of filing: 19.06.2023
(51) Int. Cl.: C08G 85/00, B29B 17/02, C08G 18/38, C08G 63/692, C08G 64/08, C08G 75/02, C08J 5/04, C08J 11/08

(54) **POLYMER COMPOUND AND METHOD FOR DECOMPOSING SAME, PLASTIC PRODUCT CONTAINING SAID POLYMER COMPOUND, FIBER-REINFORCED PLASTIC AND METHOD FOR RECOVERING FIBERS CONTAINED THEREIN, AND METHOD FOR PRODUCING POLYESTER, POLYURETHANE, OR POLYCARBONATE**

(30) Priority: 29.06.2022 JP 2022104626
(71) Applicant: Kanagawa University, Yokohama-shi, Kanagawa 221-8686 (JP)
(72) Inventor: KIHARA, Nobuhiro, Yokohama-shi, Kanagawa 221-8686 (JP)
(74) Representative: V.O.
(86) International application number: PCT/JP2023/022656
(87) International publication number: WO 2024/004741

(57) **Abstract**

To provide a polymer compound as a novel option for a readily decomposable polymer compound, a method for decomposing the same, and the like.

The above-described problem is solved by a polymer compound having a partial structure represented by general formula (1) below. This partial structure comprises a sulfide bond (sulfur atom) in the structure, and a carbonyloxy group is bonded to a carbon atom positioned at a β-position of the sulfur atom. When the polymer compound having this partial structure is treated with an oxidizing agent and a base, first a sulfide portion is oxidized and converted to a sulfone, and then a hydrogen atom of an α-carbon of the sulfone is abstracted as a proton. As a result, the carbonyloxy group in general formula (1) becomes a carboxylate anion, causing intramolecular cleavage. Consequently, this polymer compound is decomposed.

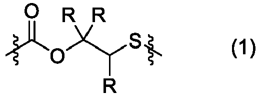

## Description

### FIELD OF THE INVENTION

The present invention relates to a polymer compound and a method for decomposing the same, a plastic product containing the polymer compound, a fiber-reinforced plastic and a method for recovering fibers contained therein, and a method for producing polyester, polyurethane, or polycarbonate.

### BACKGROUND ART

In recent years, from the perspective of environmental protection and the like, there has been active development of degradable polymer materials, represented by biodegradable polymers and photodegradable polymers, which naturally decompose even when disposed of. However, there is a problem in that biodegradable polymers and photodegradable polymers deteriorate over time in normal usage environments.

Therefore, there is a demand for polymers that do not deteriorate over time during use and are quickly decomposable at the time of disposal. As polymer compounds that are readily decomposable by oxidizing agents at the time of disposal, a few examples of dicarboxylic acid or a reactive derivative thereof (acid chloride or active ester derivative) and poly(diacylhydrazine) obtained by polycondensation of hydrazine or dicarboxylic acid dihydrazide have been proposed (refer to, for example, Patent Documents 1 and 2).

### PRIOR ART DOCUMENTSPatent Documents

Patent Document 1: Japanese Laid-Open Patent Application Publication No. 2006-022315Patent Document 2: Japanese Laid-Open Patent Application Publication No. 2011-052075SUMMARY OF THE INVENTION

### Problems to be Solved by the Invention

Under the above circumstances, an object of the present invention is to provide a polymer compound as a novel option for a readily decomposable polymer compound, a method for decomposing the same, and the like.

### Means for Solving the Problems

As a result of extensive research to solve the problem described above, the present inventor discovered that, when a sulfide (sulfur atom) is present in a polymer chain, and a structure that can form a stable anion and act as a leaving group, such as a carbonyloxy group, is bonded to the carbon atom at a β-position of the sulfide, the carbonyloxy group, upon oxidization of the sulfide by an oxidizing agent, becomes an anion due to the action of a base and is desorbed from the above-described β-carbon, resulting in cleavage of the polymer chain. The present invention has been made based on the above findings, and provides the following.

(1) According to an aspect of the present invention, a polymer compound has a partial structure represented by general formula (1) below. 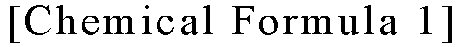 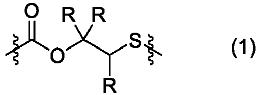 (In the above-described general formula (1), each R is independently a hydrogen atom, an alkyl group having 1 to 10 carbons that may have a substituent, an aryl group that may have a substituent, or a single bond that bonds to an atom outside general formula (1); and the single bond with a wavy line represents a bond to an atom outside general formula (1).)
(2) Further, according to an aspect of the present invention, the polymer compound according to (1) comprises a repeating unit represented by general formula (2a) or general formula (2b) below. 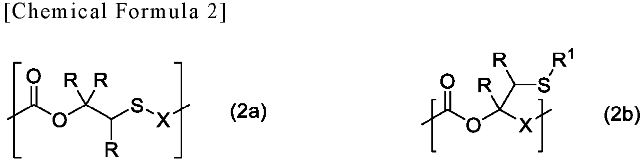 (In the above-described general formula (2a), each R is independently a hydrogen atom, an alkyl group having 1 to 10 carbons that may have a substituent, or an aryl group that may have a substituent; and X is a divalent group. In the above-described general formula (2b), each R is independently a hydrogen atom, an alkyl group having 1 to 10 carbons that may have a substituent, or an aryl group that may have a substituent; R¹ is an alkyl group having 1 to 10 carbons that may have a substituent or an aryl group that may have a substituent, or R¹ and one R may be bonded to each other to form a cyclic structure; and X is a divalent group or a single bond.)
(3) Further, according to an aspect of the present invention, the polymer compound according to (2) comprises a repeating unit represented by general formula (2a-1) or general formula (2b-1) below. 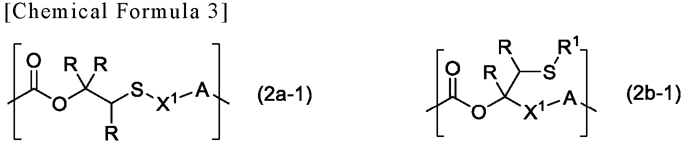 (In the above-described general formula (2a-1), each R is independently a hydrogen atom, an alkyl group having 1 to 10 carbons that may have a substituent, or an aryl group that may have a substituent; X¹ is a divalent group; and A is a single bond, -NH-, or an oxygen atom. In the above-described general formula (2b-1), each R is independently a hydrogen atom, an alkyl group having 1 to 10 carbons that may have a substituent, or an aryl group that may have a substituent; R¹ is an alkyl group having 1 to 10 carbons that may have a substituent or an aryl group that may have a substituent, or R¹ and one R may be bonded to each other to form a cyclic structure; X¹ is a divalent group; and A is a single bond, -NH-, or an oxygen atom.)
(4) Further, according to an aspect of the present invention, the polymer compound according to (2) comprises a repeating unit represented by general formula (2a-2) or general formula (2b-2) below. 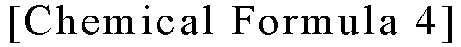 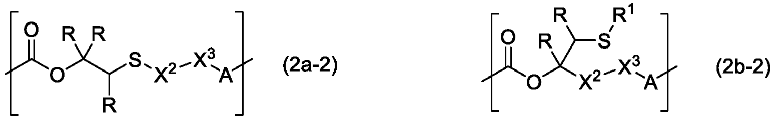 (In the above-described general formula (2a-2), each R is independently a hydrogen atom, an alkyl group having 1 to 10 carbons that may have a substituent, or an aryl group that may have a substituent; X² is a divalent group; X³ is an arylene group; and A is a single bond, -NH-, or an oxygen atom. In the above-described general formula (2b-2), each R is independently a hydrogen atom, an alkyl group having 1 to 10 carbons that may have a substituent, or an aryl group that may have a substituent; R¹ is an alkyl group having 1 to 10 carbons that may have a substituent or an aryl group that may have a substituent, or R¹ and one R may be bonded to each other to form a cyclic structure; X² is a divalent group; X³ is an arylene group; and A is a single bond, - NH-, or an oxygen atom.)
(5) Further, according to an aspect of the present invention, in the polymer compound according to (4), X³ in general formula (2a-2) or general formula (2b-2) is a phenylene group that may have a substituent, and A is a single bond.
(6) According to an aspect of the present invention, a method for decomposing a polymer compound comprises decomposing the above-described polymer compound according to any one of (1) to (5) by causing an oxidizing agent to act thereon under basic conditions.
(7) Further, according to an aspect of the present invention, in the method for decomposing a polymer compound according to (6), the above-described oxidizing agent is at least one selected from a group consisting of meta-chloroperbenzoic acid and salts thereof, perbenzoic acid and salts thereof, peracetic acid and salts thereof, persulfuric acid and salts thereof, perboric acid and salts thereof, chlorine, bromine, iodine, hypochlorous acid and salts thereof, hypobromous acid and salts thereof, hypoiodous acid and salts thereof, chlorous acid and salts thereof, bromous acid and salts thereof, iodous acid and salts thereof, chloric acid and salts thereof, bromic acid and salts thereof, iodic acid and salts thereof, perchloric acid and salts thereof, perbromic acid and salts thereof, periodic acid and salts thereof, hypervalent iodine compounds, ozone, nitrogen dioxide, nitrogen monoxide, hexavalent chromium compounds, and heptavalent manganese compounds.
(8) According to an aspect of the present invention, a method for decomposing a polymer compound comprises decomposing the polymer compound according to any one of (1) to (5) by treating the polymer compound with an oxidizing agent and subsequently further treating the polymer compound with a base.
(9) Further, according to an aspect of the present invention, in the method for decomposing a polymer compound according to (8), the above-described oxidizing agent is at least one selected from a group consisting of hydrogen peroxide, meta-chloroperbenzoic acid and salts thereof, perbenzoic acid and salts thereof, peracetic acid and salts thereof, persulfuric acid and salts thereof, perboric acid and salts thereof, chlorine, bromine, iodine, hypochlorous acid and salts thereof, hypobromous acid and salts thereof, hypoiodous acid and salts thereof, chlorous acid and salts thereof, bromous acid and salts thereof, iodous acid and salts thereof, chloric acid and salts thereof, bromic acid and salts thereof, iodic acid and salts thereof, perchloric acid and salts thereof, perbromic acid and salts thereof, periodic acid and salts thereof, hypervalent iodine compounds, ozone, nitrogen dioxide, nitrogen monoxide, hexavalent chromium compounds, and heptavalent manganese compounds.
(10) According to an aspect of the present invention, a plastic product comprises the polymer compound according to any one of (1) to (5).
(11) According to an aspect of the present invention, a fiber-reinforced plastic comprises the polymer compound according to any one of (1) to (5) as a matrix.
(12) According to an aspect of the present invention, a method for recovering fibers contained in a fiber-reinforced plastic comprises (1) causing an oxidizing agent to act on the fiber-reinforced plastic according to (11) under basic conditions or (2) treating the fiber-reinforced plastic with a solution containing an oxidizing agent, treating the fiber-reinforced plastic with a solution containing a base, and decomposing the above-described matrix to separate and recover the fibers contained in the above-described fiber-reinforced plastic.
(13) According to an aspect of the present invention, a method for producing polyester, polyurethane or polycarbonate comprises using a compound represented by chemical formula (3), general formula (4), or chemical formula (5) below as a diol component. 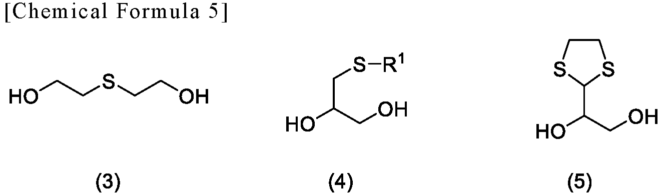 (In the above-described general formula (4), R¹ is an alkyl group having 1 to 10 carbons that may have a substituent or an aryl group that may have a substituent.)

### Effect of the Invention

According to the present invention, provided are a polymer compound as a novel option for a readily decomposable polymer compound, a method for decomposing the same, and the like.

### BRIEF DESCRIPTION OF THE DRAWINGS

Fig. 1 is a ¹H-NMR (CDCl₃, 400 MHz) spectrum of polyester 3.
Fig. 2 shows enlarged views (DMF-d₇, 400 MHz) showing changes in the ¹H-NMR spectrum of polyester 3 associated with an oxidation reaction by meta-chloroperbenzoic acid, Fig. 2 (a) being an enlarged view of the ¹H-NMR spectrum of polyester 3 and Fig. 2 (b) being an enlarged view of the ¹H-NMR spectrum two hours after the start of the oxidation reaction.
Fig. 3 shows changes in the ¹H-NMR spectrum (DMF-d₇, 400 MHz) when sulfone 4 is reacted with a base, Fig. 3 (a) being the ¹H-NMR spectrum of sulfone 4, and Fig. 3 (b) being the ¹H-NMR spectrum one day after the start of the reaction.

### Embodiments of the Invention

Hereinafter, an embodiment of a polymer compound of the present invention, a first implementation mode and a second implementation mode of a method for decomposing the polymer compound, an embodiment of a plastic product, an embodiment of a fiber-reinforced plastic, an implementation mode of a method for recovering fibers contained in the fiber-reinforced plastic, and an implementation mode of a method for producing polyester, polyurethane, or polycarbonate will each be described. It should be noted that the present invention is not at all limited to the following embodiments and implementation modes, and can be implemented with modifications within the scope of the present invention.

### <Polymer compound>

First, the embodiment of a polymer compound of the present invention will be described. The polymer compound of the present invention has a partial structure represented by general formula (1) below. First, the significance of having such a partial structure will be described.

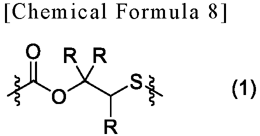

The partial structure represented by the above-described general formula (1) includes a sulfide (sulfur atom) in the structure, and a carbonyloxy group is bonded to a carbon atom positioned at a β-position of the sulfur atom. The significance of having this partial structure will be described with reference to the chemical reaction formula described below. It should be noted that, in the chemical reaction formula described below, a substituent R in the above-described general formula (1) is removed to facilitate understanding by simplification. It should be noted that both (A) shown in the chemical reaction formula in an upper row below and (A') shown in the chemical reaction formula in a lower row below correspond to the partial structure represented by the above-described general formula (1). For example, (A') corresponds to a case of a single bond in which, in the above-described general formula (1), one R (one R bonded to the β-carbon of the sulfide) is bonded to an atom outside general formula (1) is formed, as described later.

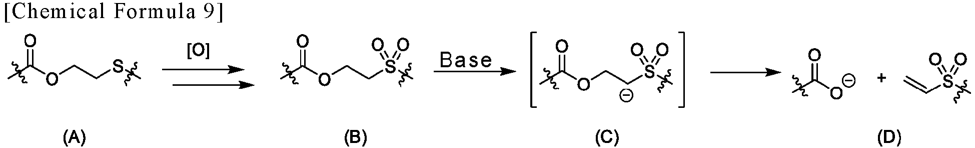

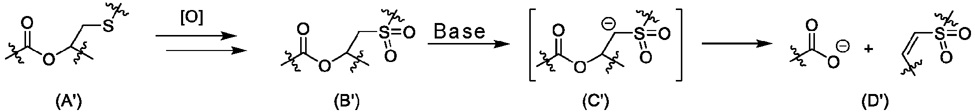

When the partial structure represented by the above-described general formula (1) is oxidized by an oxidizing agent, the sulfide portion is oxidized and converted to sulfone as shown in (B). It should be noted that sulfide has a property of not readily being oxidized by oxygen molecules, which are radical oxidizing agents, but readily being oxidized through twoelectron oxidation by oxidizing agents such as peroxides. Therefore, the oxidation reaction of the above-described (A) -> (B) does not occur when the polymer compound of the present invention is used in air, but first occurs after treatment with an oxidizing agent. This also applies to (A') -> (B') shown in the lower row.

When sulfide is converted to sulfone through the oxidation described above, an electron density of an α-carbon of the sulfone decreases, and an acidity of the hydrogen atom bonded to this carbon increases. At this time, when a base is present in the surrounding area, the hydrogen atom of the α-carbon is abstracted as a proton, obtaining an intermediate (C) that is a carbanion. In the intermediate (C), when a carbonyloxy group that can stably exist as an anion is bonded to a β-carbon, this carbonyloxy group becomes a carboxylate anion, causing intramolecular cleavage as shown in (D). That is, the polymer compound having the partial structure of the above-described general formula (1) is reduced in molecular weight through a series of reactions shown in (A) to (D), and is in a state suitable for reuse as a compound or for disposal. It should be noted that, for (A') to (D') shown in the lower row as well, the molecular weight is reduced by a similar reaction mechanism. The present invention has been made by focusing on the fact that a polymer compound having the partial structure represented by the above-described general formula (1) has such reactivity, and the polymer compound according to this invention has the excellent characteristics of being readily decomposable when no longer in use, and easily recycled as a compound and disposed of. Here, the above-described (A) to (D) show an example in which sulfide is contained in a main chain, for example, of the polymer compound, and the above-described (A') to (D') show an example in which sulfide is contained in a side chain, for example, of the polymer compound, but the molecular weight is reduced by similar reaction mechanisms in both cases.

It should be noted that, in order to decompose the polymer compound of the present invention as shown in the above-described chemical reaction formula, an oxidizing agent for oxidizing the sulfide and a base for desorbing the hydrogen atom bonded to the α-carbon of the sulfone as a protons are required. In the decomposition of the polymer compound of the present invention, the polymer compound may be treated with an oxidizing agent and then reacted with a base, or may be reacted with an oxidizing agent in a basic solution. The oxidizing agent includes common agents without particular limitation, such as hydrogen peroxide, meta-chloroperbenzoic acid and salts thereof, perbenzoic acid and salts thereof, peracetic acid and salts thereof, persulfuric acid and salts thereof, perboric acid and salts thereof, chlorine, bromine, iodine, hypochlorous acid and salts thereof, hypobromous acid and salts thereof, hypoiodous acid and salts thereof, chlorous acid and salts thereof, bromous acid and salts thereof, iodous acid and salts thereof, chloric acid and salts thereof, bromic acid and salts thereof, iodic acid and salts thereof, perchloric acid and salts thereof, perbromic acid and salts thereof, periodic acid and salts thereof, hypervalent iodine compounds, ozone, nitrogen dioxide, nitrogen monoxide, hexavalent chromium compounds, and heptavalent manganese compounds. It should be noted that a hypervalent iodine compound refers to a compound in which an iodine atom contained in the compound has more electrons than the eight required by the octet rule, making the compound hypervalent. Examples of such a hypervalent iodine compound include iodosobenzene and the like. Further, the base includes sodium hydrogen carbonate, sodium carbonate, potassium hydrogen carbonate, potassium carbonate, sodium hydroxide, potassium hydroxide, triethylamine, sodium phosphate, disodium monohydrogen phosphate, 1,8-diazabicyclo[5.4.0]undec-7-ene, tetramethylguanidine, and the like.

In general formula (1), each of the plurality of present Rs is independently a hydrogen atom, an alkyl group having 1 to 10 carbons that may have a substituent, an aryl group that may have a substituent, or a single bond that bonds to an atom outside general formula (1). Such an alkyl group includes a methyl group, an ethyl group, a propyl group, an isopropyl group, a butyl group, a tert-butyl group, a pentyl group, a hexyl group, a 2-ethylhexyl group, an octyl group, a nonyl group, a decyl group, and the like. Further, such an aryl group includes a phenyl group, a naphthyl groups, and the like. It should be noted that, in the above-described general formula (1), a single bond with a wavy line represents a bond to another atom that exists outside the above-described general formula (1). As described above, R may be a single bond that bonds to an atom outside general formula (1). For example, in a case in which one of the Rs bonded to the β-carbon of the sulfide is such a single bond, the partial structure represented by general formula (1) is as in general formula (1-1) below, making it possible to adopt a structure such as

(A') shown in the above-described chemical reaction formula. As already mentioned, the polymer compound of the present invention exhibits degradability as long as the polymer compound has the partial structure represented by the above-described general formula (1), and thus a structure of a portion other than the partial structure represented by the above-described general formula (1) does not matter. 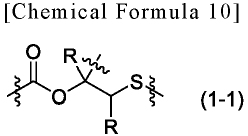 (In the above-described general formula (1-1), R is the same as in the above-described general formula (1), and a single bond with a wavy line represents a bond to another atom that exists outside the above-described general formula (1-1).)

As a more preferred example, the polymer compound of the present invention includes a polymer compound including a repeating unit represented by general formula (2a) or general formula (2b) below. In the example represented by general formula (2a) below, the partial structure represented by the above-described general formula (1) is incorporated into a main chain of the polymer compound, and in the example represented by general formula (1b) below, while the partial structure represented by the above-described general formula (1) is partially incorporated into the main chain of the polymer compound, the sulfide portion is present in a side chain of the polymer compound. In either case, the polymer compound is highly decomposed by treatment with an oxidizing agent and a base.

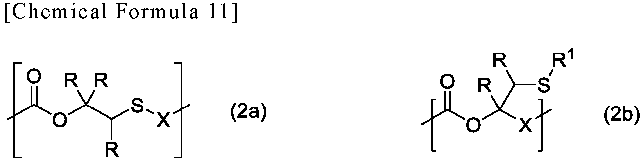

In the above-described general formula (2a), each R is independently determined, and is a hydrogen atom, an alkyl group having 1 to 10 carbons that may have a substituent, or an aryl group that may have a substituent; and X is a divalent group. Such an alkyl group includes a methyl group, an ethyl group, a propyl group, an isopropyl group, a butyl group, a tert-butyl group, a pentyl group, a hexyl group, a 2-ethylhexyl group, an octyl group, a nonyl group, a decyl group, and the like. Further, such an aryl group includes a phenyl group, a naphthyl groups, and the like.

In the above-described general formula (2b), each R is independently determined, and is a hydrogen atom, an alkyl group having 1 to 10 carbons that may have a substituent, or an aryl group that may have a substituent; R¹ is an alkyl group having 1 to 10 carbons that may have a substituent or an aryl group that may have a substituent, or R¹ and one R may be bonded to each other to form a cyclic structure; and X is a divalent group or a single bond. Such an alkyl group includes a methyl group, an ethyl group, a propyl group, an isopropyl group, a butyl group, a tert-butyl group, a pentyl group, a hexyl group, a 2-ethylhexyl group, an octyl group, a nonyl group, a decyl group, and the like. Further, such an aryl group includes a phenyl group, a naphthyl groups, and the like.

It should be noted that general formula (2b) includes the partial structure of the above-described general formula (1-1) in which one of the Rs bonded to the β-carbon of the sulfide in the above-described general formula (1) is a single bond that bonds to an atom outside general formula (1), and thus includes the partial structure of the above-described general formula (1). That is, general formula (2b) corresponds to a structure in which, in the structure of general formula (1-1) in which one of the Rs bonded to the β-carbon of the sulfide in general formula (1) is a single bond that bonds to an atom outside general formula (1), X- is bonded to the middle single bond among the three single bonds with the wavy lines, and R¹ is bonded to the single bond on the right side.

In general formula (2b), "R¹ and one R bond to each other to form a cyclic structure" means that R¹ and any R bond to each other to form a cyclic structure, forming a heterocycle containing a sulfur atom adjacent to R¹. In a case in which such a cyclic structure is formed, preferably R¹ bonds mutually with R bonded to the α-carbon of the sulfide to form the cyclic structure. Such a cyclic structure includes 5-membered rings such as 1,3-dithiolane, 1,2-dithiolane, and tetrahydrothiophene, 6-membered rings such as thiane, dithiane, thiomorpholine, thiopyran, and dithiin, and the like. As an example for understanding, in general formula (2b), the structure when R¹ bonds mutually with R bonded to the α-carbon of the sulfide to form a 1,3-dithiolane structure includes a repeating unit such as shown on the left side below. It should be noted that such a structure also has the partial structure shown in the above-described general formula (1). That is, if described using the general formula shown on the right side below, an inner side surrounded by the plurality of wavy lines marking the single bonds indicates the above-described general formula (1). Thus, in the above-described general formula (1), R may be a single bond that bonds to an atom outside general formula (1), and thus a repeating unit such as shown on the left side below also has the partial structure represented by general formula (1).

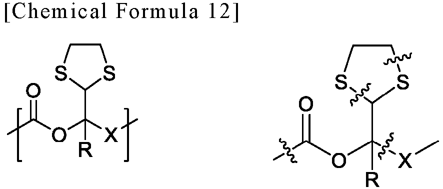

Examples of the polymer compound represented by the above-described general formula (2a) include polysulfide including a repeating unit represented by general formula (2a-A) below. In the polysulfide represented by general formula (2a-A) below, X in general formula (2a) also includes the partial structure represented by the above-described general formula (1).

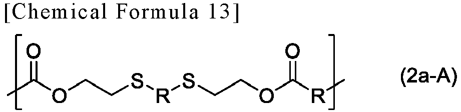

In the above-described general formula (2a-A), each R is independently a divalent group. Such a group includes an alkylene group having 1 to 10 carbons, an arylene group, a group in which a plurality of alkylene groups and/or arylene groups are linked to each other by hetero atoms, carbonyl groups, or single bonds, or the like.

Further, polymer compounds that more specifically represent X represented by the above-described general formula (2a) or general formula (2b) include polymer compounds including a repeating unit represented by general formula (2a-1) or general formula (2b-1) below.

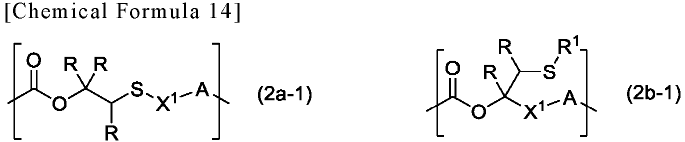

In the above-described general formula (2a-1), each R is independently determined and contents thereof are the same as in the above-described general formula (2a). In the above-described general formula (2a-1), X¹ is a divalent group, and A is a single bond, -NH-, or an oxygen atom. The polymer compound represented by general formula (2a-1) is polyester when this A is a single bond, polyurethane when this A is -NH-, and polycarbonate when this A is an oxygen atom.

In the above-described general formula (2b-1), each R is independently determined and the contents thereof are the same as in the above-described general formula (2b), R¹ is also the same as in the above-described general formula (2b), and R¹ and one R may be bonded to each other to form a cyclic structure as in the above-described general formula (2b). In the above-described general formula (2b-1), X¹ is a divalent group, and A is a single bond, -NH-, or an oxygen atom. The polymer compound represented by general formula (2b-1) is polyester when this A is a single bond, polyurethane when this A is -NH-, and polycarbonate when this A is an oxygen atom.

It should be noted that general formula (2b-1) includes the partial structure of the above-described general formula (1-1) in which one of the Rs bonded to the β-carbon of the sulfide in the above-described general formula (1) is a single bond that bonds to an atom outside general formula (1), and thus includes the partial structure of the above-described general formula (1). That is, general formula (2b-1) corresponds to a structure in which, in the structure of general formula (1-1) in which one of the Rs bonded to the β-carbon of the sulfide in general formula (1) is a single bond that bonds to an atom outside general formula (1), X¹-A- is bonded to the middle single bond among the three single bonds with the wavy lines, and R¹ is bonded to the single bond on the right side.

Further, polymer compounds that more specifically represent X¹ represented by the above-described general formula (2a-1) or general formula (2b-1) include polymer compounds including a repeating unit represented by general formula (2a-2) or general formula (2b-2) below.

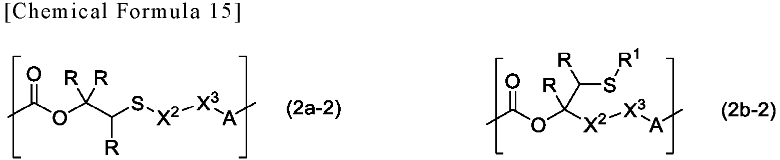

In the above-described general formula (2a-2), each R is independently determined and the contents thereof are the same as in the above-described general formula (2a). In the above-described general formula (2a-2), A is a single bond, -NH-, or an oxygen atom, X² is a divalent group, and X³ is an arylene group. Such an arylene group includes preferably a phenylene group that may have a substituent, a naphthylene group that may have a substituent, a group in which a plurality of arylene groups are linked to each other by alkylene groups, hetero atoms, carbonyl groups, or single bonds, or the like.

In the above-described general formula (2b-2), each R is independently determined and the contents thereof are the same as in the above-described general formula (2b), R¹ is also the same as in the above-described general formula (2b), and R¹ and one R may be bonded to each other to form a cyclic structure as in the above-described general formula (2b). In the above-described general formula (2b-2), A is a single bond, -NH-, or an oxygen atom, X² is a divalent group, and X³ is an arylene group. Such an arylene group includes preferably a phenylene group that may have a substituent, a naphthylene group that may have a substituent, a group in which a plurality of arylene groups are linked to each other by alkylene groups, hetero atoms, carbonyl groups, or single bonds, or the like.

It should be noted that general formula (2b-2) includes the partial structure of the above-described general formula (1-1) in which one of the Rs bonded to the β-carbon of the sulfide in the above-described general formula (1) is a single bond that bonds to an atom outside general formula (1), and thus includes the partial structure of the above-described general formula (1). That is, general formula (2b-2) corresponds to a structure in which, in the structure of general formula (1-1) in which one of the Rs bonded to the β-carbon of the sulfide in general formula (1) is a single bond that bonds to an atom outside general formula (1), X²-X³-A- is bonded to the middle single bond among the three single bonds with the wavy lines, and R¹ is bonded to the single bond on the right side.

Examples of the polymer compound represented by the above-described general formula (2a-2) include polyester including a repeating unit represented by the chemical formula below. In this polyester, X³ in the above-described general formula (2a-2) is a phenylene group, A is a single bond, each R is a hydrogen atom, and X² is a divalent group represented by - CH₂CH₂O(C=O)-.

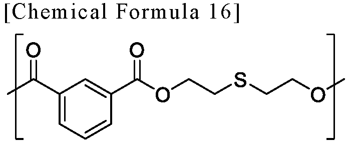

Further, examples of the polymer compound represented by the above-described general formula (2a-2) include polyurethane including a repeating unit represented by the chemical formula below. In this polyurethane, the components X², X³, and A surrounded by dashed rectangles in the chemical formula below correspond to X², X³, and A in the above-described general formula (2a-2), respectively, and each R in the above-described general formula (2a-2) is a hydrogen atom.

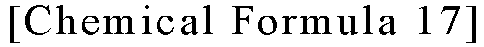

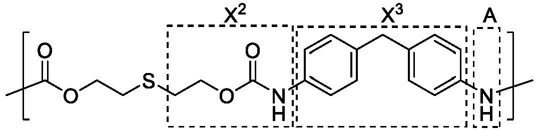

Further, examples of the polymer compound represented by the above-described general formula (2b-1) include polyester including a repeating unit represented by the chemical formula below. In this polyester, X¹ in the above-described general formula (2b-1) corresponds to the portion surrounded by a dashed rectangle in the chemical formula below, A is a single bond, and R¹ and one R are bonded to each other to form a cyclic thioacetal (1,3 -dithiolane structure), and the remaining Rs are hydrogen atoms.

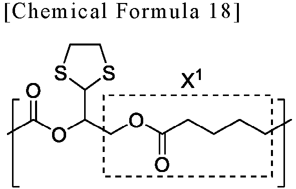

Further, examples of the polymer compound represented by the above-described general formula (2b-2) include polyester including a repeating unit represented by the chemical formula below. In this polyester, each R in the above-described general formula (2b-2) is a hydrogen atom, R¹ is a butyl group, X² is the portion surrounded by a dashed rectangle in the chemical formula below, X³ is a p-phenylene group, and A is a single bond.

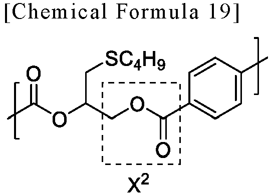

Further, examples of the polymer compound represented by the above-described general formula (2b-2) include polyester including a repeating unit represented by the chemical formula below. In this polyester, each R in the above-described general formula (2b-2) is a hydrogen atom, R¹ is a butyl group, X² is the portion surrounded by a dashed rectangle in the chemical formula below, X³ is an o-phenylene group, and A is a single bond.

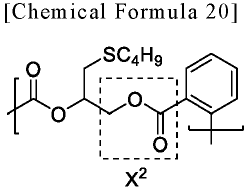

It should be noted that, needless to say, the present invention is not limited to these polymer compounds including the repeating units exemplified above.

### <First implementation mode of method for decomposing polymer compound>

Next, the first implementation mode of the method for decomposing a polymer compound of the present invention will be described. The method for decomposing a polymer compound of the present invention is a method for decomposing the above-described polymer compound of the present invention by using an oxidizing agent and a base.

In this implementation mode, the above-described polymer compound of the present invention is decomposed by causing an oxidizing agent to act thereon under basic conditions. As already mentioned, the polymer compound of the present invention has the partial structure represented by the above-described general formula (1), and this partial structure is cleaved and decomposed by the action of the oxidizing agent and the base. The decomposition method of the present invention is a method of utilizing such properties of the polymer compound of the present invention, and is excellent in facilitating recycling and disposal of the polymer compound after use.

In this implementation mode, the polymer compound of the present invention is brought into contact with a basic solution containing an oxidizing agent, thereby causing this polymer compound to decompose. As already mentioned, the decomposition of the polymer compound of the present invention occurs through a two-stage process of (1) an oxidation reaction of sulfide to sulfone by an oxidizing agent, and (2) an abstraction reaction of the hydrogen atom bonded to the α-carbon of the sulfone by a base, followed by intramolecular cleavage. In this implementation mode, these reactions are carried out in a single step.

The oxidizing agent used in this implementation mode includes common agents without particular limitation, including meta-chloroperbenzoic acid and salts thereof, perbenzoic acid and salts thereof, peracetic acid and salts thereof, persulfuric acid and salts thereof, perboric acid and salts thereof, chlorine, bromine, iodine, hypochlorous acid and salts thereof, hypobromous acid and salts thereof, hypoiodous acid and salts thereof, chlorous acid and salts thereof, bromous acid and salts thereof, iodous acid and salts thereof, chloric acid and salts thereof, bromic acid and salts thereof, iodic acid and salts thereof, perchloric acid and salts thereof, perbromic acid and salts thereof, periodic acid and salts thereof, hypervalent iodine compounds, ozone, nitrogen dioxide, nitrogen monoxide, hexavalent chromium compounds, heptavalent manganese compounds, and the like. It should be noted that hydrogen peroxide is also well known as an oxidizing agent, but an oxidizing action of hydrogen peroxide is reduced under basic conditions, and thus use of hydrogen peroxide as an oxidizing agent in this implementation mode is not preferred. An amount of the oxidizing agent in the reaction solution includes about 1 equivalent to 10 equivalents with respect to a number of partial structures represented by the above-described general formula (1) included in the polymer compound, but using a larger amount is also acceptable.

The base used to cause the reaction solution to have basic conditions in this implementation mode includes sodium hydrogen carbonate, sodium carbonate, potassium hydrogen carbonate, potassium carbonate, sodium hydroxide, potassium hydroxide, triethylamine, sodium phosphate, disodium monohydrogen phosphate, 1,8-diazabicyclo[5.4.0]undec-7-ene, tetramethylguanidine, and the like. An amount of the base in the reaction solution includes about 1 equivalent to 10 equivalents with respect to the number of partial structures represented by the above-described general formula (1) included in the polymer compound, but using a larger amount is also acceptable.

After the polymer compound of the present invention is brought into contact with such a reaction solution, the reaction is continued until the polymer compound decomposes and disappears. Such contact includes preferably immersing the polymer compound in the reaction solution and agitating the mixture.

### <Second implementation mode of method for decomposing polymer compound>

Next, the second implementation mode of the method for decomposing a polymer compound of the present invention will be described. In this implementation mode, the above-described polymer compound of the present invention is treated with an oxidizing agent and then further treated with a base to decompose the polymer compound. In this implementation mode as well, similar to the above-described first implementation mode, the decomposition method is a method of utilizing the property in which the partial structure represented by the above-described general formula (1) included in the polymer compound of the present invention is cleaved and decomposed by the action of the oxidizing agent and the base, and is excellent in facilitating the recycling and the disposal of the polymer compound after use. It should be noted that the difference between the above-described first implementation mode and this implementation mode is that the former is a mode of performing oxidizing agent treatment and base treatment in one step, whereas the latter is a mode of implementing the oxidizing agent treatment and the base treatment in two separate steps. Even if these treatments are performed in two steps as in this implementation mode, the polymer compound of the present invention can be decomposed similar to the above-described first implementation mode.

The oxidizing agents used in this implementation mode are similar to those mentioned in the above-described first implementation mode, but include hydrogen peroxide in addition thereto. In this implementation mode, the base treatment and the oxidizing agent treatment are separated, making it possible to also use hydrogen peroxide, which is difficult to use under basic conditions. It should be noted that the amount of the oxidizing agent in the reaction solution for the oxidizing agent treatment includes about 1 equivalent to 10 equivalents with respect to the number of partial structures represented by the above-described general formula (1) included in the polymer compound, but using a larger amount is also acceptable.

In this implementation mode, the polymer compound of the present invention is brought into contact with a solution containing the oxidizing agent and, once these are sufficiently reacted, the base is added to the solution, performing the base treatment. The base used here includes the same bases as those mentioned in the above-described first implementation mode. It should be noted that the amount of the base used for the base treatment includes about 1 equivalent to 10 equivalents with respect to the number of partial structures represented by the above-described general formula (1) included in the polymer compound, but using a larger amount is also acceptable.

When the polymer compound of the present invention is brought into contact with such a reaction solution and reacted, the polymer compound is preferably immersed in the reaction solution and the mixture is agitated. After the base is added to the reaction solution as described above, the reaction is continued until the polymer compound in the reaction solution decomposes and disappears.

### <Plastic product>

A plastic product containing the above-described polymer compound of the present invention is also an aspect of the present invention. As described above, the polymer compound of the present invention can be readily decomposed by an oxidizing agent and a base, and thus a plastic product containing the polymer compound can be easily recycled and disposed of after use.

Such a plastic product includes various products in accordance with the properties of the above-described polymer compound of the present invention. As already mentioned, the polymer compound of the present invention can be developed in polyester, polyurethane, polycarbonate, and the like, and plastic products containing these include various products.

### <Fiber-reinforced plastic and method for recovering fibers contained therein>

A fiber-reinforced plastic containing the above-described polymer compound of the present invention as a matrix and a method for recovering fibers contained therein are also aspects of the present invention.

The fiber-reinforced plastic of the present invention is obtained by impregnating fibers such as glass fibers and carbon fibers with the polymer compound of the present invention as a matrix. Such fibers include glass fibers, carbon fibers, aramid fibers, and the like and, among these, include preferably carbon fibers. These fibers are exemplified by unidirectional materials in which fibers are arranged in one direction, woven materials such as plain weave, twill weave, and satin weave, nonwoven materials, and the like.

As already mentioned, the polymer compound of the present invention can be readily decomposed by treatment with an oxidizing agent and a base, facilitating disposal of the fiber-reinforced plastic after use. Further, some fibers contained in a fiber-reinforced plastic are expensive, such as carbon fibers. However, with the fiber-reinforced plastic of the present invention, the polymer compound that is a matrix can be decomposed and removed without damaging the fibers, and thus such expensive fibers can also be recovered and reused. The method for decomposing the polymer compound of the present invention has already been described, and thus description thereof is omitted here.

### <Method for producing polyester, polyurethane or polycarbonate>

A method for producing polyester, polyurethane or polycarbonate that uses a compound represented by chemical formula (3), general formula (4), or chemical formula (5) below as a diol component is also an aspect of the present invention.

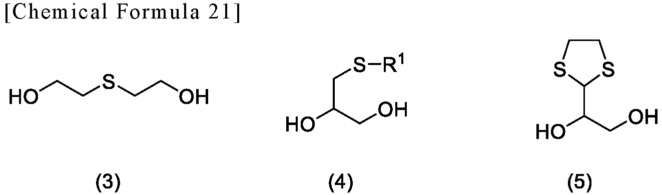

The diol compounds represented by the above-described chemical formula (3), general formula (4), or chemical formula (5) all have sulfide (sulfur atom) in the molecule and a hydroxyl group in the carbon atom at the β-position of the sulfur atom. Accordingly, when this compound is polycondensed with a dicarboxylic acid compound such as phthalic acid, polyester that is the polymer compound of the present invention having the partial structure represented by the above-described general formula (1) is obtained. When this compound is polyadded with a diisocyanate compound instead of a dicarboxylic acid compound, polyurethane that is the polymer compound of the present invention having the partial structure represented by the above-described general formula (1) is obtained. When this compound is polycondensed with phosgene, a chloroformic acid ester such as phenyl chloroformate, a carbonic acid ester such as diphenyl carbonate, or the like instead of dicarboxylic acid, polycarbonate that is the polymer compound of the present invention having the partial structure represented by the above-described general formula (1) is obtained.

In the above-described general formula (4), R¹ is an alkyl group having 1 to 10 carbons that may have a substituent or an aryl group that may have a substituent. Such an alkyl group includes a methyl group, an ethyl group, a propyl group, an isopropyl group, a butyl group, a tert-butyl group, a pentyl group, a hexyl group, a 2-ethylhexyl group, an octyl group, a nonyl group, a decyl group, and the like. Further, such an aryl group includes a phenyl group, a naphthyl groups, and the like.

The dicarboxylic acid compound polycondensed with the compound represented by the above-described chemical formula (3), general formula (4), or chemical formula (5) includes, without limitation, any dicarboxylic acid compound that can be used for polyester synthesis. The diisocyanate compound polyadded with the compound represented by the above-described chemical formula (3), general formula (4), or chemical formula (5) includes, without limitation, any diisocyanate compound that can be used for polyurethane synthesis. Various types of such compounds are commercially available and easy to obtain, and thus description thereof is omitted here.

### Examples

Hereinafter, the present invention will be described in further detail by way of examples, but is not be limited to these examples.

### [Synthesis of polyester 3]

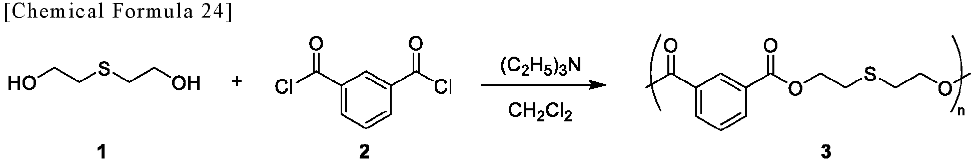

Under an argon atmosphere, 1.7 mL of triethylamine was added to a methylene chloride solution (3 mL) of isophthaloyl chloride 2 (0.609 g, 3.00 mmol) and 2,2'-thiodiethanol 1 (0.367 g, 3.00 mmol), and this mixture was agitated overnight. The reaction mixture was poured into 200 mL of methanol while vigorously agitated, and the precipitate was collected by filtration, thoroughly washed with methanol, and then dried under a vacuum to obtain polyester 3 as a white powder (yield: 0.756 g).

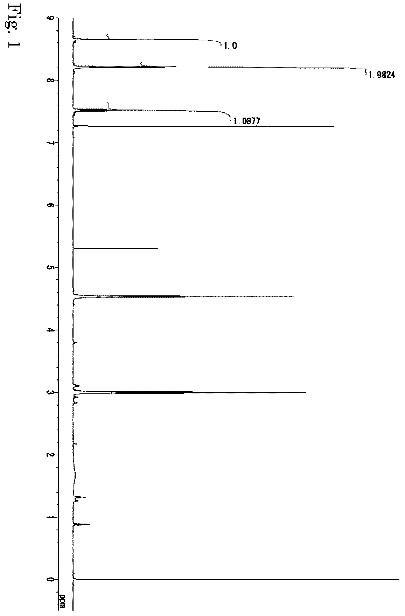

The ¹H-NMR spectrum (CDCl₃, 400 MHz) of the polyester 3 obtained by the procedure described above is shown in Fig. 1. In the spectrum in Fig. 1, a chemical shift, a coupling, and an integrated value of each signal all supported the structure of the polyester 3.

### [Oxidative decomposition of polyester 3]

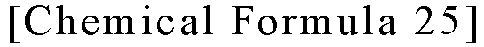

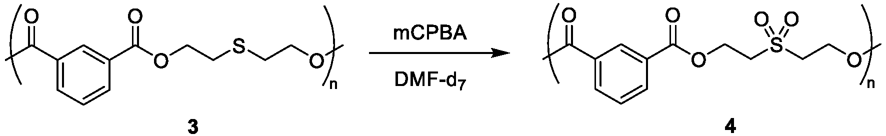

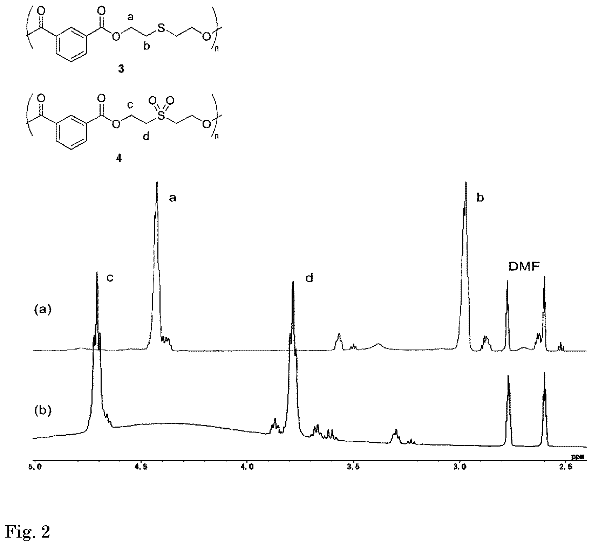

Meta-chloroperbenzoic acid (mCPBA) was added to a deuterated N,N-dimethylformamide (DMF-d₇) solution (0.7 mL) of the polyester 3 and reacted at room temperature for two hours. Fig. 2 shows an enlarged view of the ¹H-NMR spectrum of the polyester 3 (DMF-d₇, 400 MHz) and an enlarged view of the ¹H-NMR spectrum two hours after the start of the reaction (DMF-d₇, 400 MHz), respectively. In Fig. 2, Fig. 2 (a) is an enlarged view of the ¹H-NMR spectrum of the polyester 3, and Fig. 2 (b) is an enlarged view of the ¹H-NMR spectrum two hours after the start of the reaction.

As shown in Fig. 2, the signals of the polyester 3 completely disappeared two hours after the start of the reaction, and one set of triplets was newly observed at 3.8 ppm and 4.7 ppm, and thus it is understood that the polyester 3 quantitatively oxidized to sulfone 4.

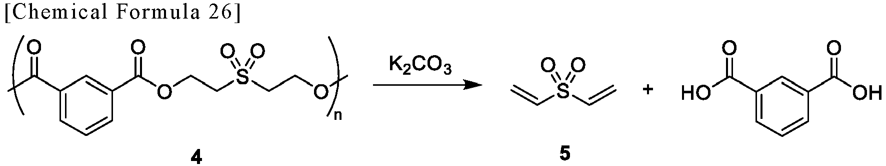

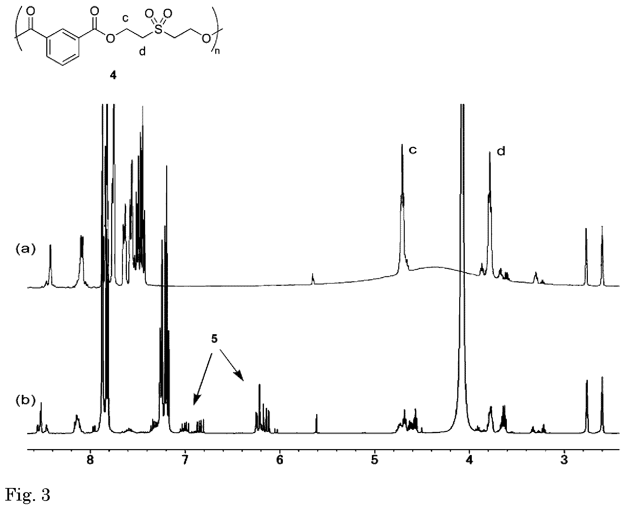

Potassium carbonate was added as a base to the DMF-d₇ solution of the sulfone 4 obtained by the procedure described above, and the mixture was left to react at room temperature for one day. Then, the ¹H-NMR spectra before and after this reaction were compared. Fig. 3 shows the ¹H-NMR spectrum of the sulfone 4 (DMF-d₇, 400 MHz) and the ¹H-NMR spectrum one day after the start of the reaction (DMF-d₇, 400 MHz), respectively. In Fig. 3, Fig. 3 (a) is the ¹H-NMR spectrum of the sulfone 4, and Fig. 3 (b) is the ¹H-NMR spectrum one day after the start of the reaction.

One day after the start of the reaction, a vinyl group signal thought to be derived from compound 5 was observed at 6 to 7 ppm, indicating that the sulfone 4 is rapidly decomposed even with a weak base such as potassium carbonate. From these results, it can be understood that the polymer compound of the present invention is decomposed under mild conditions by treatment with an oxidizing agent and a base.

### [Synthesis of polyurethane 8]

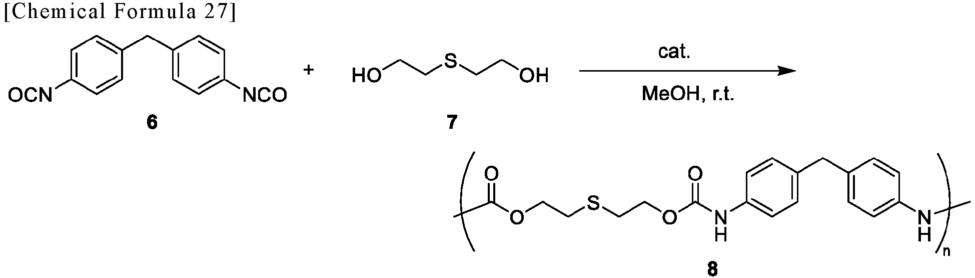

Under an argon atmosphere, a dimethylacetamide solution (DMAc, 4 mL) of 4,4'-diphenylmethane diisocyanate 6 (0.755 g, 3.02 mmol), 2,2'-thiodiethanol 7 (0.368 g, 3.01 mmol), and dibutyltin laurate (0.105 g, 0.167 mmol) was agitated at room temperature for two hours. The reaction mixture was poured into 100 mL of methanol while vigorously agitated, and the precipitate was collected by filtration, thoroughly washed with methanol, and then dried under a vacuum to obtain polyurethane 8 as a white powder (yield: 1.191 g). The polyurethane 8 was determined to have a number average molecular weight of 8800 and a dispersion of 12.0 by gel permeation chromatography (GPC; dimethylformamide (DMF), polystyrene standard).

### [Oxidative decomposition of polyurethane 8]

Meta-chloroperbenzoic acid (mCPBA, 0.525 g, 3.04 mmol) was added to the DMF solution (2.5 mL) of the polyurethane 8 (0.302 g, 0.271 mmol-unit), and agitated at room temperature for one hour. The reaction mixture was poured into 80 mL of methanol while vigorously agitated, and the precipitate was collected by filtration, thoroughly washed with methanol, and then dried under a vacuum to obtain sulfone-type polyurethane as a white powder (yield: 0.278 g). The obtained sulfone-type polyurethane (0.023 g) was dispersed in a mixed solvent of 1.5 mL of a 5% aqueous sodium carbonate solution and 1 mL of methanol, and the mixture was agitated for one day. The GPC (DMF, polystyrene standard) of the polyurethane, while still dispersed, was measured, and a number average molecular weight of 870 and a dispersion of 1.1 were found. From these results, it can be understood that the molecular weight of the polyurethane 8 was reduced by treatment with an oxidizing agent and a base.

### [Synthesis of polyester 11]

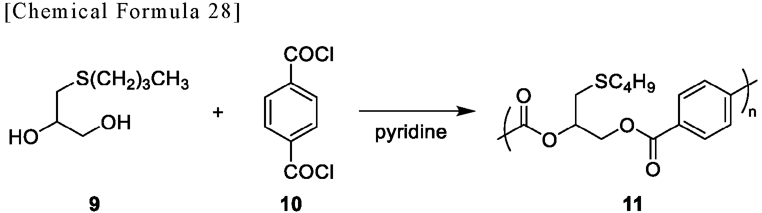

Under an argon atmosphere, terephthaloyl chloride 10 (2.030 g, 10.0 mmol) was added to a pyridine solution (10 mL) of 3-butylthiopropane-1,2-diol 9 (1.642 g, 10.0 mmol), and the mixture was agitated for 12 hours. The reaction mixture was poured into 200 mL of methanol while vigorously agitated, and the precipitate was collected by filtration, thoroughly washed with methanol, and then dried under a vacuum to obtain polyester 11 as a white powder (yield: 2.884 g).

### [Synthesis of polyester 14]

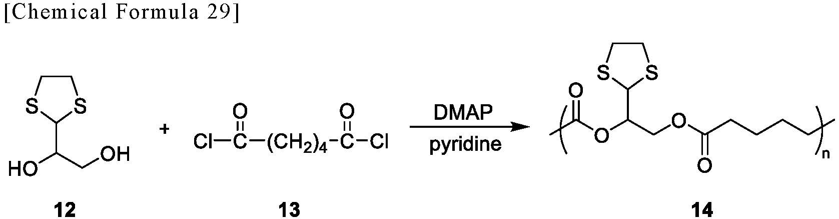

Under an argon atmosphere, adipoyl chloride 13 (0.915 g, 5.00 mmol) was added to a pyridine solution (5 mL) of 2-(1,2-dihydroxyethyl)-1,3-dithiolane 12 (0.830 g, 4.99 mmol) and 4-dimethylaminopyridine (DMAP, 0.031 g, 0.25 mmol), and the mixture was agitated for three hours. The reaction mixture was poured into 150 mL of methanol while vigorously agitated, and the precipitate was collected by filtration, thoroughly washed with methanol, and then dried under a vacuum to obtain polyester 14 as a white powder (yield: 1.354 g).

### [Oxidative decomposition of polyester]

Each of the obtained polyester 11 and polyester 14 was dissolved in methylene chloride, and the mixture was coated on a glass plate and then dried to form a polyester film on the glass plate. The films did not peel off from the glass plates even when scratched with tweezers. A 5% methanol solution of mCPBA was applied to these films, and the films were allowed to stand for one hour, and then washed with a 5% aqueous sodium carbonate solution. As a result, the films peeled off only in the areas where the 5% methanol solution of mCPBA was applied.

## Claims

1. A polymer compound having a partial structure represented by general formula (1) below. 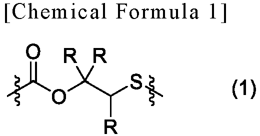 (In the above-described general formula (1), each R is independently a hydrogen atom, an alkyl group having 1 to 10 carbons that may have a substituent, an aryl group that may have a substituent, or a single bond that bonds to an atom outside general formula (1); and the single bond with a wavy line represents a bond to an atom outside general formula (1).)

2. The polymer compound according to claim 1, comprising a repeating unit represented by general formula (2a) or general formula (2b) below. 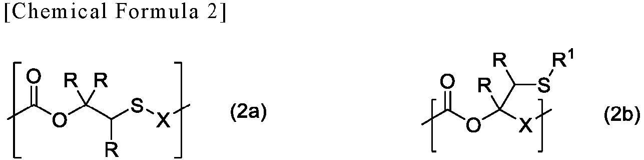 (In the above-described general formula (2a), each R is independently a hydrogen atom, an alkyl group having 1 to 10 carbons that may have a substituent, or an aryl group that may have a substituent; and X is a divalent group. In the above-described general formula (2b), each R is independently a hydrogen atom, an alkyl group having 1 to 10 carbons that may have a substituent, or an aryl group that may have a substituent; R¹ is an alkyl group having 1 to 10 carbons that may have a substituent or an aryl group that may have a substituent, or R¹ and one R may be bonded to each other to form a cyclic structure; and X is a divalent group or a single bond.)

3. The polymer compound according to claim 2, comprising a repeating unit represented by general formula (2a-1) or general formula (2b-1) below. 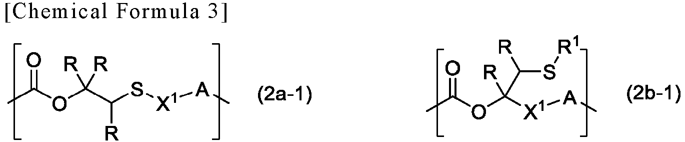 (In the above-described general formula (2a-1), each R is independently a hydrogen atom, an alkyl group having 1 to 10 carbons that may have a substituent, or an aryl group that may have a substituent; X¹ is a divalent group; and A is a single bond, -NH-, or an oxygen atom. In the above-described general formula (2b-1), each R is independently a hydrogen atom, an alkyl group having 1 to 10 carbons that may have a substituent, or an aryl group that may have a substituent; R¹ is an alkyl group having 1 to 10 carbons that may have a substituent or an aryl group that may have a substituent, or R¹ and one R may be bonded to each other to form a cyclic structure; X¹ is a divalent group; and A is a single bond, -NH-, or an oxygen atom.)

4. The polymer compound according to claim 2, comprising a repeating unit represented by general formula (2a-2) or general formula (2b-2) below. 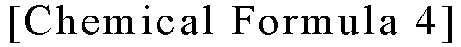 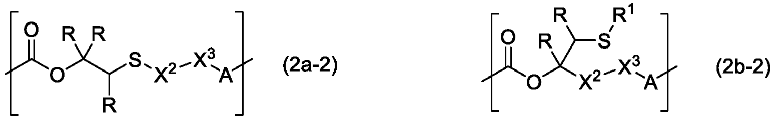 (In the above-described general formula (2a-2), each R is independently a hydrogen atom, an alkyl group having 1 to 10 carbons that may have a substituent, or an aryl group that may have a substituent; X² is a divalent group; X³ is an arylene group; and A is a single bond, -NH-, or an oxygen atom. In the above-described general formula (2b-2), each R is independently a hydrogen atom, an alkyl group having 1 to 10 carbons that may have a substituent, or an aryl group that may have a substituent; R¹ is an alkyl group having 1 to 10 carbons that may have a substituent or an aryl group that may have a substituent, or R¹ and one R may be bonded to each other to form a cyclic structure; X² is a divalent group; X³ is an arylene group; and A is a single bond, - NH-, or an oxygen atom.)

5. The polymer compound according to claim 4, wherein
X³ in general formula (2a-2) or general formula (2b-2) is a phenylene group that may have a substituent, and A is a single bond.

6. A method for decomposing a polymer compound, the method comprising:
decomposing the polymer compound according to any one of claims 1 to 5 by causing an oxidizing agent to act thereon under basic conditions.

7. The method for decomposing a polymer compound according to claim 6, wherein the oxidizing agent is at least one selected from a group consisting of meta-chloroperbenzoic acid and salts thereof, perbenzoic acid and salts thereof, peracetic acid and salts thereof, persulfuric acid and salts thereof, perboric acid and salts thereof, chlorine, bromine, iodine, hypochlorous acid and salts thereof, hypobromous acid and salts thereof, hypoiodous acid and salts thereof, chlorous acid and salts thereof, bromous acid and salts thereof, iodous acid and salts thereof, chloric acid and salts thereof, bromic acid and salts thereof, iodic acid and salts thereof, perchloric acid and salts thereof, perbromic acid and salts thereof, periodic acid and salts thereof, hypervalent iodine compounds, ozone, nitrogen dioxide, nitrogen monoxide, hexavalent chromium compounds, and heptavalent manganese compounds.

8. A method for decomposing a polymer compound, the method comprising:
decomposing the polymer compound according to any one of claims 1 to 5 by treating the polymer compound with an oxidizing agent and subsequently further treating the polymer compound with a base.

9. The method for decomposing a polymer compound according to claim 8, wherein the oxidizing agent is at least one selected from a group consisting of hydrogen peroxide, meta-chloroperbenzoic acid and salts thereof, perbenzoic acid and salts thereof, peracetic acid and salts thereof, persulfuric acid and salts thereof, perboric acid and salts thereof, chlorine, bromine, iodine, hypochlorous acid and salts thereof, hypobromous acid and salts thereof, hypoiodous acid and salts thereof, chlorous acid and salts thereof, bromous acid and salts thereof, iodous acid and salts thereof, chloric acid and salts thereof, bromic acid and salts thereof, iodic acid and salts thereof, perchloric acid and salts thereof, perbromic acid and salts thereof, periodic acid and salts thereof, hypervalent iodine compounds, ozone, nitrogen dioxide, nitrogen monoxide, hexavalent chromium compounds, and heptavalent manganese compounds.

10. A plastic product comprising:
the polymer compound according to any one of claims 1 to 5.

11. A fiber-reinforced plastic comprising:
the polymer compound according to any one of claims 1 to 5 as a matrix.

12. A method for recovering fibers contained in a fiber-reinforced plastic, the method comprising:
(1) causing an oxidizing agent to act on the fiber-reinforced plastic according to claim 11 under basic conditions or (2) treating the fiber-reinforced plastic with a solution containing an oxidizing agent;
treating the fiber-reinforced plastic with a solution containing a base; and
decomposing the matrix to separate and recover the fibers contained in the fiber-reinforced plastic.

13. A method for producing polyester, polyurethane or polycarbonate, the method comprising:
using a compound represented by chemical formula (3), general formula (4), or chemical formula (5) below as a diol component. 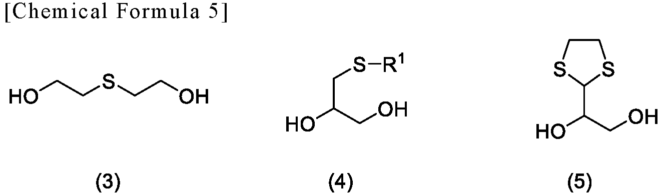 (In the above-described general formula (4), R¹ is an alkyl group having 1 to 10 carbons that may have a substituent or an aryl group that may have a substituent.)
